**Europäisches Patentamt**

**European Patent Office**

**Office européen des brevets**

(19)

(11) Numéro de publication: **0 212 541**
**B1**

(12) FASCICULE DE BREVET EUROPEEN

(45) Date de publication du fascicule du brevet:
11.10.89

(51) Int. Cl.⁴: **B03B 5/56, A23N 12/02**

(21) Numéro de dépôt: 86111124.3

(22) Date de dépôt: 12.08.86

(54) Epierreur à tambour pour des betteraves et des produits analogues.

(30) Priorité: 20.08.85 FR 8512540

(43) Date de publication de la demande:
04.03.87 Bulletin 87/10

(45) Mention de la délivrance du brevet:
11.10.89 Bulletin 89/41

(84) Etats contractants désignés:
BE DE FR GB IT NL

(56) Documents cités:
EP-A- 0 129 638
FR-A- 2 250 575
FR-A- 2 437 245
FR-A- 2 480 623

(73) Titulaire: MAGUIN S.A., B.P. no. 1 Charmes, F-02800 La Fère(FR)

(72) Inventeur: Swiderski, Michel, Rogecourt, F-02800 La Fere(FR)

(74) Mandataire: Casalonga, Axel et al, BUREAU D.A. CASALONGA - JOSSE Morassistrasse 8, D-8000 München 5(DE)

ACTORUM AG

## Description

La présente invention se rapporte à un épierreur à tambour à flux ascensionnel pour des betteraves sucrières et produits analogues, comprenant un tambour monté en rotation autour d'un axe horizontal dans un bac muni de moyens pour son insertion dans une conduite de transport hydraulique des betteraves, de manière à créer une nappe d'eau dans le bac, le tambour comprenant une roue munie sur sa périphérie intérieure de plusieurs trappes débouchant vers l'intérieur de la roue et communiquant chacune par une gaine avec une écope précédant la trappe dans le sens de rotation du tambour pour créer, lors de la rotation du tambour, un flux d'eau ascensionnel à travers chaque trappe se trouvant dans la nappe d'eau, chaque trappe étant suivie d'un godet qui entraîne vers le haut les pierres séparées des betteraves par le flux d'eau ascensionnel, pour les déverser dans une trémie d'évacuation.

Les épierreurs connus de ce type (voir par exemple FR-A 2 437 245) comportent deux ou au maximum quatre trappes, ce qui fait que la séparation des pierres et des betteraves contenues dans la roue ne s'effectue par en permanence sur toute la largeur de la nappe d'eau se trouvant à l'intérieur de la roue, mais uniquement à l'endroit de la trappe passant dans l'eau. De ce fait, la séparation des pierres et des betteraves n'est pas fiable, les pierres étant entraînées avec les betteraves hors de la roue. C'est la raison pour laquelle, sur des épierreurs connus, le tambour comporte deux roues successives à trappes et à godets, traversées successivement par les betteraves. Il est également connu, sur un épierreur à tambour, (voir par exemple FR-A 2 250 575) de prévoir un plus grand nombre de trappes dans une roue, mais le flux ascensionnel à travers les trappes est, dans ce cas, créé par une pompe de circulation. Cet épierreur connu présente une efficacité d'épierrage élevée, mais nécessite l'utilisation d'une pompe qui doit être d'autant plus puissante que la surface utile d'épierrage est importante, d'où un prix de revient accrû et une fiabilité réduite. En outre, des déflecteurs fixes qui provoquent des risques de coincement sont nécessaires à l'intérieur de la roue.

La présente invention a pour objet un épierreur à tambour à flux ascensionnel créé par la seule rotation du tambour, c'est-à-dire sans pompe de circulation, cet épierreur étant d'une structure simple et fiable et assurant une grande efficacité de séparation.

Sur l'épierreur à tambour conforme à l'invention, le bac comporte un élément d'alimentation en betteraves débouchant dans la roue sensiblement sur toute la largeur de la nappe d'eau à l'intérieur de la roue et la roue comporte des trappes en nombre tel que pendant la rotation du tambour, deux trappes au moins se trouvent à tout moment dans la nappe d'eau contenue dans la roue et créent à tout moment un flux ascensionnel dans la roue, sensiblement sur toute la largeur de cette nappe d'eau.

Ainsi, les betteraves sont déversées dans la roue sur toute la largeur de la nappe d'eau et sont soumises, sur toute cette largeur, au flux ascensionnel pratiquement continu créé à tout moment par au moins deux trappes, ce qui assure un effet d'épierrage continu.

De préférence, le nombre des trappes est tel qu'au moins trois trappes se trouvent en permanence dans la nappe d'eau contenue dans la roue.

Suivant un mode de réalisation particulièrement préféré, quatre trappes se trouvent en permanence dans la nappe d'eau contenue dans la roue.

De préférence, les trappes occupent au moins la moitié de la périphérie intérieure de la roue.

Le nombre d'écopes se trouvant simultanément dans la nappe d'eau contenue dans le bac doit être égal au nombre de trappes se trouvant simultanément dans la nappe d'eau contenue dans la roue. Pour assurer une alimentation suffisante des trappes par les gaines à écopes, il est avantageux de disposer des gaines à écopes sur les deux côtés de la roue et d'alimenter les trappes successives par des gaines à écopes situées sur les côtés opposés de la roue.

Dans le cas d'un grand nombre de trappes, il est avantageux de prévoir les gaines à écopes en deux rangées sur chaque côté de la roue.

La roue à trappes et à godets est suivie, dans le sens de passage des betteraves à travers l'épierreur, d'un tronçon de tambour tronconique, perforé, qui permet le retour de l'eau vers la roue et par lequel les pierres qui auraient pu s'échapper de la roue sont retenues et renvoyées par gravité dans cette dernière. Pour renforcer cet effet de renvoi des pierres dans la roue, il est avantageux de prévoir des spires intérieures de renvoi sur le tronçon de tambour tronconique.

En se référant aux dessins annexés, on va décrire ci-après plus en détail un mode de réalisation illustratif et non limitatif de l'objet de l'invention; sur les dessins :

la figure 1 est une vue en élévation latérale d'un épierreur conforme à l'invention;
la figure 2 est une vue en bout suivant la flèche II sur la figure 1;
la figure 3 est une coupe longitudinale suivant III-III de la figure 1, du tambour de l'épierreur;
la figure 4 est une section transversale suivant IV-IV de la figure 1, de la roue à trappes du tambour;
la figure 5 représente un demi-développé intérieur de la virole extérieure de la roue du tambour.

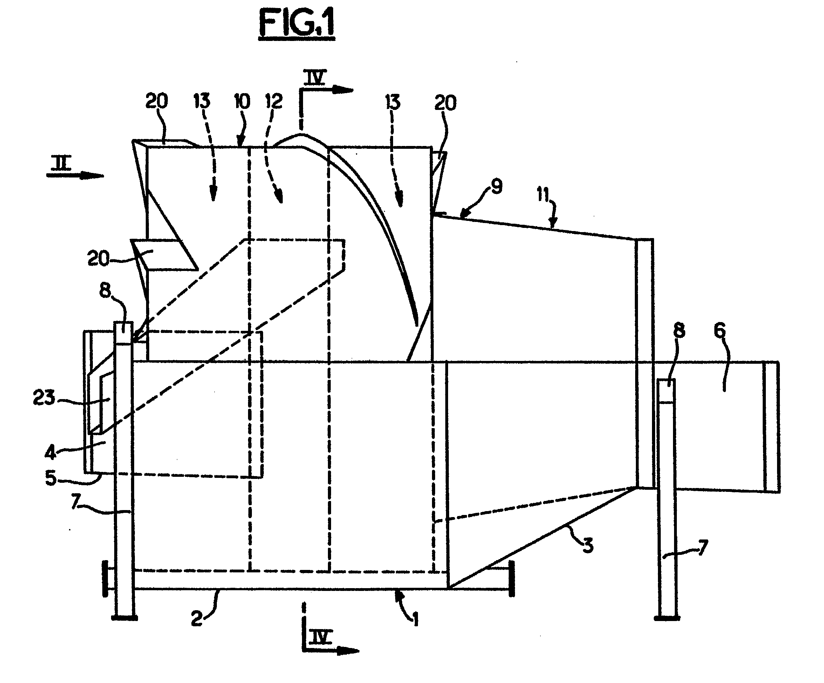

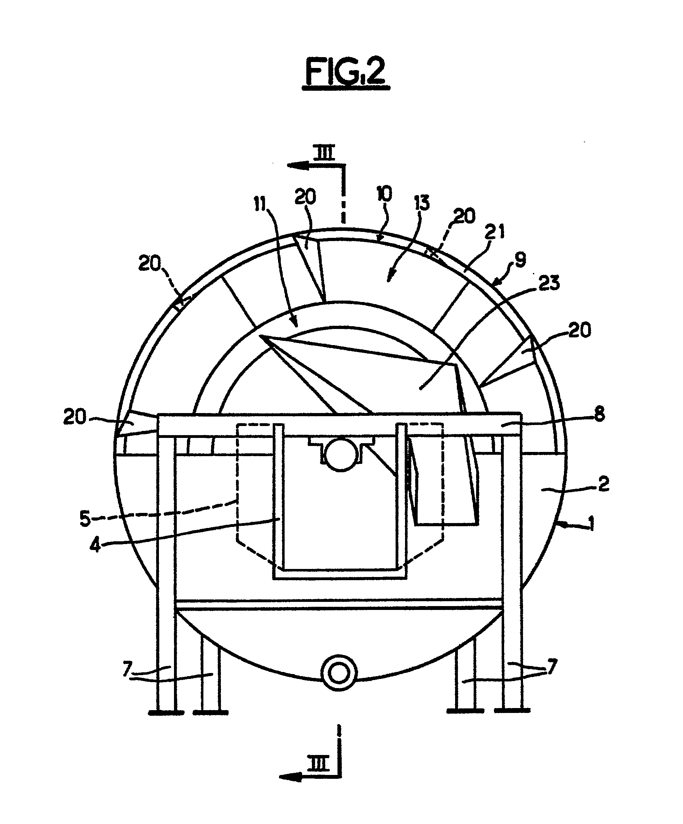

Selon les figures 1 et 2, l'épierreur conforme à l'invention comprend un bac 1 formé par assemblage d'une partie demi-cylindrique 2 et d'une partie 3 convergente en demi-tronc de cône. A l'extrémité de la partie demi-cylindrique 2 est raccordé un tronçon de nochère comprenant une partie 4 faisant saillie vers l'extérieur du bac 2, en vue du raccordement à une nochère ou à un caniveau de transport hydraulique de betteraves, et une partie divergente 5 faisant saillie à l'intérieur du bac 1 sur une largeur accrue, comme indiqué en tirets. A l'extrémité de la partie tronconique 3 du bac est relié un tronçon de nochère 6 convergent, permettant le raccordement du bac à une nochère ou à un caniveau d'évacuation de betteraves. Par les deux tronçons de nochère 4 et 6, le bac 1 peut être intercalé dans une nochère ou un caniveau de transport hydraulique de betteraves.

Le bac 1 comporte quatre pieds 7 pour son installation.

Les pieds 7 sont réunis deux à deux par des traverses 8 portant des paliers pour le montage d'un tambour 9 en rotation autour d'un axe horizontal.

Le tambour 9 qui occupe toute la longueur du bac 1 se compose d'une partie de tambour 10 cylindrique et d'un tronçon de tambour 11 tronconique.

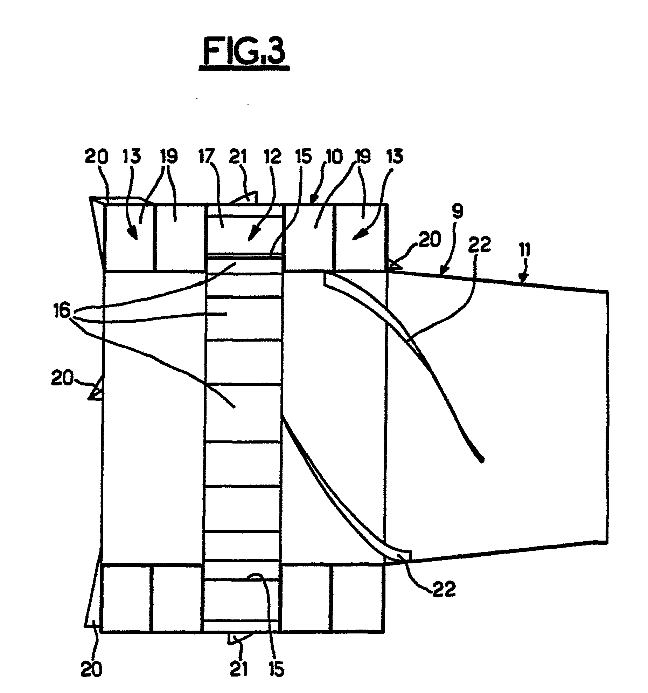

Comme le montre la figure 3, la partie cylindrique 10 du tambour est formée d'une roue médiane 12 flanquée de chaque côté d'une roue latérale 13.

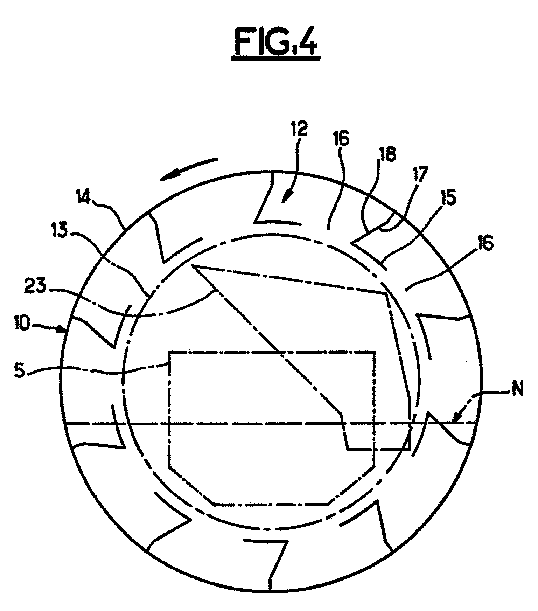

La roue médiane 12 est formée d'une virole extérieure 14 ininterrompue, d'une virole intérieure 15 interrompue par dix trappes 16 régulièrement réparties sur le pourtour, et de dix cloisons 17 sensiblement radiales formant avec la virole extérieure 14 dix godets 18 faisant directement suite aux trappes 16 (voir figures 3 et 4).

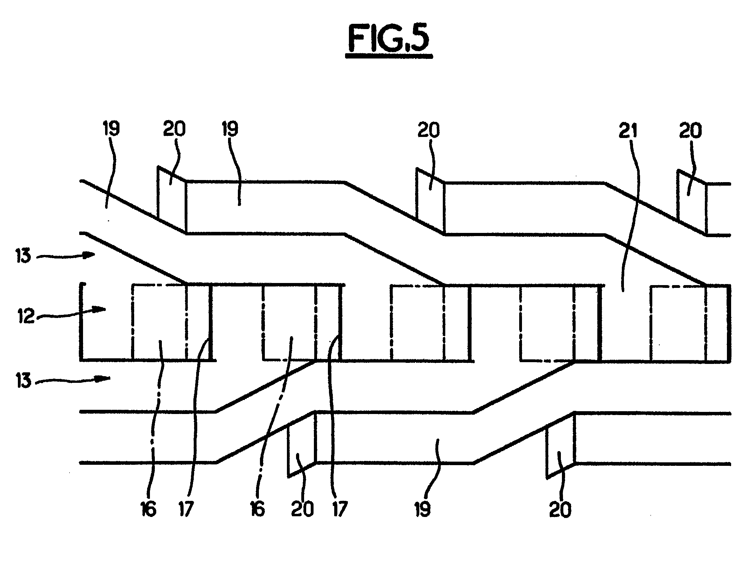

Chaque roue latérale 13 constitue, comme le montre surtout la figure 5, un ensemble annulaire de cinq gaines 19 en deux étages axiaux, dont chacune s'étend depuis le côté de la roue 13 éloigné de la roue médiane 12, où elle débouche axialement et comporte une écope 20 dépassant axialement et radialement, jusqu'à l'espace situé entre deux cloisons 17 successives de la roue médiane 12, cet espace débouchant à l'intérieur de la roue par une trappe 16. Les gaines 19 des roues 13 opposées débouchent en alternance depuis les côtés opposés dans les espaces successifs situés entre chaque fois deux cloisons 17.

Il est à noter que le diamètre intérieur des roues latérales 13 est inférieur au diamètre intérieur de la roue médiane 12.

Le tronçon de tambour 11 tronconique est perforé et forme le prolongement de la surface intérieure d'une roue latérale 13.

La partie cylindrique de tambour 10 porte extérieurement une ou plusieurs spires en hélice 21. La partie de tambour 11 tronconique ainsi que la roue latérale 13 à laquelle se raccorde la partie 11 portent intérieurement une ou plusieurs spires 22 dont la fonction apparaîtra par la suite.

Il y a lieu de noter que l'on n'a pas représenté, sur la figure 3, les bras, par exemple au nombre de trois, prévus à chaque extrémité du tambour pour servir de support du tambour en vue du montage en rotation sur les traverses 8.

La partie divergente 5 du tronçon de nochère du bac 1 s'étend, à l'intérieur du tambour 9, jusqu'à la roue médiane 12 et présente ici une largeur maximale, compte tenu du diamètre intérieur de la roue 12.

Une trémie d'évacuation 23 fixée au bac 1 s'étend, depuis le même côté que la partie 5 du tronçon de nochère à l'intérieur du tambour 9 en traversant toute la roue 13, de manière que l'extrémité supérieure élargie de la trémie 23 se trouve dans la partie supérieure de la roue latérale 13, côté tronçon de tambour tronconique 11, alors que son extrémité inférieure débouche à l'extérieur de la cuve 1 à côté de la partie 4 du tronçon de nochère d'entrée.

On va décrire ci-après le mode de fonctionnement de l'épierreur tel qu'illustré par les dessins annexés, en se référant surtout à la figure 4.

La cuve 1 étant intercalée, par ses deux tronçons de nochère 4 et 6, dans un conduit de transport hydraulique de betteraves (nochère ou caniveau), il s'établit, dans la cuve 2, un niveau d'eau référencé N sur la figure 4, en fonction du niveau d'eau dans le conduit dans lequel est insérée la cuve.

Les betteraves auxquelles sont mélangées les pierres à séparer, sont déversées par la partie élargie 5 du tronçon de nochère d'entrée dans la roue 12, sur toute la largeur de cette partie élargie 5, c'est-à-dire sensiblement sur toute la largeur de la nappe d'eau se trouvant à l'intérieur de la roue 12. Sous l'effet de la rotation du tambour 9 par des moyens non représentés qui peuvent être, par exemple, un pignon entraîné par un moteur et engrenant avec une denture, par exemple en cage d'écureuil, prévue sur le tambour 9, les gaines 19 situées en alternance de part et d'autre de la roue 12 se remplissent d'eau au passage de leurs écopes 20 dans l'eau contenue dans le bac. La longueur des gaines 19 étant telle que l'écope de chaque gaine sort de l'eau contenue dans le bac lorsque la trappe 16 dans laquelle débouche cette même gaine pénètre dans l'eau contenue dans le bac, le volume d'eau piégé dans chaque gaine s'échappe de bas en haut par la trappe correspondante depuis le moment où cette trappe pénètre dans l'eau jusqu'au moment où cette même trappe ressort de l'eau. Par conséquent, l'eau piégée dans chaque gaine crée, pendant tout le passage de la trappe en question dans l'eau contenue dans le bac, un flux ascensionnel par ladite trappe.

Etant donné le grand nombre de trappes 16 réparties sur la périphérie intérieure de la roue 12, au moins trois trappes se trouvent, à tout moment, dans l'eau contenue dans le bac, créant ainsi en permanence un flux ascensionnel continu pratiquement sur toute la largeur de la nappe d'eau contenue dans la roue.

De ce fait, les betteraves déversées dans la roue 12 pratiquement sur toute la largeur de cette nappe d'eau, sont soumises, dès qu'elles quittent le tronçon de nochère 5, sur toute la largeur intérieure de la roue, au flux ascensionnel créé par les trois trappes et se trouvent ainsi immédiatement mises en suspension et entraînées par le flux d'eau, par-dessus le seuil existant entre la virole intérieure 15 de la roue 12 et la surface intérieure de la roue latérale 13 arrière, dans le tronçon tronconique 11 perforé du tambour, d'où une partie de l'eau revient vers l'avant du bac, après avoir traversé le tronçon de tambour 11 perfooré, alors que la partie restante de l'eau entraîne les betteraves dans le tronçon de nochère 6 et dans la conduite faisant suite au bac 1. Par contre, les pierres mélangées aux betteraves déversées dans la roue 12 tombent par gravité, à l'encontre du flux ascensionnel par les trappes 16, à travers ces trappes 16 vers le bas, c'est-à-dire sur la virole extérieure 14 de la roue 12, devant les godets 17 qui les entraînent vers le haut pour les déverser dans la trémie d'évacuation 23.

Les éventuelles pierres qui n'auraient pas été séparées des betteraves au passage dans la roue 12 et qui seraient entraînées avec les betteraves dans le tronçon de tambour 11 tronconique, sont ici retenues par la forme tronconique du tronçon de tambour 11 et ramenées par les spires intérieures 22 de ce tronçon dans la roue 12 pour être soumises ici de nouveau à l'effet de séparation par flux ascensionnel.

La ou les spires 21 sur la surface extérieure de la partie cylindrique 10 du tambour servent à empêcher un dépôt de boues, sable et graviers dans la partie 2 plus profonde du bac 1.

Il convient de noter que le réglage du flux ascensionnel optimal peut se faire par simple variation de la vitesse de rotation du tambour. En effet, la vitesse du flux ascensionnel est directement proportionnelle à la vitesse de rotation du tambour.

## Revendications

1. Epierreur à tambour à flux ascensionnel pour betteraves sucrières et produits analogues, comprenant un tambour (9) monté en rotation autour d'un axe horizontal dans un bac (1) muni de moyens (4, 6) pour son insertion dans une conduite de transport hydraulique de betteraves de manière à créer une nappe d'eau dans le bac, ledit tambour comprenant une roue (12) munie sur sa périphérie intérieure de plusieurs trappes (16) débouchant vers l'intérieur de la roue et communiquant chacune par une gaine (19) avec une écope (20) précédant la trappe dans le sens de rotation du tambour, pour créer, lors de la rotation du tambour, un flux d'eau ascensionnel à travers chaque trappe se trouvant dans la nappe d'eau, chaque trappe étant suivie d'un godet (18) qui entraîne vers le haut les pierres séparées des betteraves par le flux d'eau ascensionnel pour les déverser dans une trémie d'évacuation (23), caractérisé par le fait que le bac (1) comporte un tronçon d'entrée de betteraves (5) débouchant dans la roue à trappes sensiblement sur toute la largeur de la nappe d'eau à l'intérieur de cette dernière et que la roue comporte des trappes (16) en nombre tel que deux trappes au moins se trouvent à tout moment dans la nappe d'eau contenue dans la roue et créent en permanence un flux ascensionnel dans la roue sensiblement sur toute la largeur de cette nappe d'eau.

2. Epierreur suivant la revendication 1, caractérisé par le fait que la roue comporte des trappes en nombre tel que trois trappes au moins se trouvent en permanence dans la nappe d'eau contenue dans la roue.

3. Epierreur suivant la revendication 2, caractérisé par le fait que la roue comporte des trappes en nombre tel que quatre trappes au moins se trouvent en permanence dans la nappe d'eau contenue dans la roue.

4. Epierreur suivant l'une quelconque des revendications précédentes, caractérisé par le fait que la roue comporte des trappes occupant au moins la moitié de la circonférence intérieure (15) de la roue.

5. Epierreur suivant l'une quelconque des revendications précédentes, caractérisé par le fait que la roue à trappes (12) est flanquée de part et d'autre de deux roues latérales (13) formant deux séries de gaines (19), les gaines situées sur les deux côtés de la roue à trappes (12) débouchant en alternance dans les trappes successives.

6. Epierreur suivant la revendication 5, caractérisé par le fait que chaque roue latérale (13) comporte deux étages axiaux de gaines (19).

7. Epierreur suivant l'une quelconque des revendications précédentes, caractérisé par le fait que le bac comporte un tronçon de nochère d'entrée de betteraves augmentant de largeur à l'intérieur de la roue.

8. Epierreur suivant l'une quelconque des revendications précédentes, caractérisé par le fait que la roue à trappes (12) flanquée de gaines (19) à écopes (20) sur les deux côtés est suivie d'un tronçon de tambour tronconique perforé (11).

9. Epierreur suivant la revendication 8, caractérisé par le fait que le tronçon de tambour tronconique perforé (11) est muni intérieurement de spires (22) de retour des pierres vers la roue à trappes (12).

## Claims

1. Drum-type stone-removing machine with ascending flow for surgar-beet and similar products, comprising a drum (9) mounted for rotation about a horizontal axis in a vat (1) which is provided with means (4, 6) for its insertion into a conduit for conveying beet hydraulically in such a way as to create a sheet of water in the vat, the said drum comprising a wheel (12) which is provided on its inner periphery with several traps (16) which open toward the inside of the wheel and each of which is connected by way of a duct (19) to a scoop (20) which precedes the trap in the direction of rotation of the drum, in order to create, when the drum rotates, an ascending flow of water through each trap which is in the sheet of water, each trap being followed by a bucklet (18) which carries upward the stones which have been separated from the beet by the ascending flow of water, and tips them out into a discharging hopper (23), characterised in that the vat (1) comprises a beet intake section (5) which opens into the trap wheel approximately over the entire width of the sheet of water inside the said wheel, and that the wheel comprises a number of traps (16) which is such that there are at any time at least two traps in the sheet of water contained within the wheel, which traps create a permanent, ascending flow inside the wheel approximately over the entire width of the said sheet of water.

2. Stone-removing machine according to claim 1, characterised in that the wheel comprises a number of traps such that there are always at least three traps in the sheet of water contained within the wheel.

3. Stone-removing machine according to claim 2, characterised in that the wheel comprises a number of traps such that there are always at least four traps in the sheet of water contained within the wheel.

4. Stone-removing machine according to any one of the preceding claims, characterised in that the wheel comprises traps which take up at least half of the inner circumference (15) of the wheel.

5. Stone-removing machine according to any one of the preceding claims, characterised in that the trap wheel (12) has on either side two lateral wheels (13) forming two series of ducts (19), the ducts situated on the two sides of the trap wheel (12) opening alternately into the successive traps.

6. Stone-removing machine according to claim 5, characterised in that each lateral wheel (13) comprises two axial tiers of ducts (19).

7. Stone-removing machine according to any one of the preceding claims, characterised in that the vat comprises a section of guttering for the intake of beet, which section of guttering increases in width inside the wheel.

8. Stone-removing machine according to any one of the preceding claims, characterised in that the trap wheel (12) which has ducts (19) on both sides with scoops (20) is followed by a perforated drum section (11) in the shape of a truncated cone.

9. Stone-removing machine according to claim 8, characterised in that the perforated drum section (11) in the shape of a truncated cone is provided on the inside with spiral projections (22) for returning stones to the trap wheel (12).

**Patentansprüche**

1. Trommel-Steinabscheider mit aufsteigender Wasserströmung für Zuckerrüben und analoge Erzeugnisse, mit einer Trommel (9), die drehbar um eine horizontale Achse in einem Trog (1) gelagert ist, welcher mit Mitteln (4, 6) zum Einsetzen in eine hydraulische Förderleitung für Zuckerrüben versehen ist, so daß sich in dem Trog eine Wasserfläche einstellt, wobei die Trommel ein Rad (12) enthält, das an seinem inneren Umfang mehrere Fallen (16) aufweist, die nach dem Inneren des Rades zu münden und jede über eine Leitung mit einer Schöpfkelle (10) verbunden ist, die im Drehsinn der Trommel vor der Falle angeordnet ist, um beim Drehen der Trommel durch jede der sich unter der Wasserfläche befindlichen Falle eine aufsteigende Wasserströmung zu erzeugen, wobei jeweils hinter der Falle ein Becher (18) angeordnet ist, der die durch die aufsteigende Wasserströmung aus den Zuckerrüben abgeschiedene Steine nach oben transportiert, um sie in einen Auslauftrichter (23) zu entleeren, dadurch gekennzeichnet, daß der Trog (1) einen Zuckerrüben-Einfüllstutzen (5) enthält, der im wesentlichen über die gesamte Breite der Wasserfläche innerhalb des Fallenrades in dieses mündet, und daß das Rad so viele Fallen (16) besitzt, daß sich jederzeit wenigstens zwei Fallen unter der Wasserfläche im Rad befinden und im wesentlichen über die gesamte Breite der Wasserfläche im Rad ständig eine aufsteigende Wasserströmung erzeugen.

2. Steinabscheider gemäß Anspruch 1, dadurch gekennzeichnet, daß das Rad so viele Fallen besitzt, daß sich ständig wenigstens drei Fallen unter der Wasserfläche im Trog befinden.

3. Steinabscheider gemäß Anspruch 2, dadurch gekennzeichnet, daß das Rad so viele Fallen besitzt, daß sich ständig wenigstens vier Fallen unter der Wasserfläche im Trog befinden.

4. Steinabscheider gemäß einem beliebigen der vorstehenden Ansprüche, dadurch gekennzeichnet, daß das Rad Fallen besitzt, die wenigstens die Hälfte der inneren Umfangsfläche (15) des Rades einnehmen.

5. Steinabscheider gemäß einem beliebigen der vorstehenden Ansprüche, dadurch gekennzeichnet, daß das Fallenrad (12) auf beiden Seiten von Seitenrädern (13) flankiert wird, die zwei Reihen von Leitungen (19) bilden, wobei die an den beiden Seiten des Fallenrades (12) angeordneten Leitungen abwechselnd in die aufeinanderfolgenden Fallen münden.

6. Steinabscheider gemäß Anspruch 5, dadurch gekennzeichnet, daß jedes Seitenrad (13) zwei axiale Stufen von Leitungen (19) besitzt.

7. Steinabscheider gemäß einem beliebigen der vorstehenden Ansprüche, dadurch gekennzeichnet, daß der Trog einen Zuckerrübeneinlauf-Rinnenabschnitt besitzt, dessen Breite innerhalb des Rades zunimmt.

8. Steinabscheider gemäß einem beliebigen der vorstehenden Ansprüche, dadurch gekennzeichnet, daß sich an das auf beiden Seiten von Leitungen (19) mit Schöpfkellen (20) flankierte Fallenrad (12) ein durchlöchertes kegelstumpfförmiges Trommelstück anschließt.

9. Steinabscheider gemäß Anspruch 8, dadurch gekennzeichnet, daß das durchlöcherte kegelstumpfförmige Trommelstück (11) im Inneren mit Schraubengängen (22) zur Rückführung der Steine in das Fallenrad (12) versehen ist.

# FIG.1

EP 0 212 541 B1

# FIG.2

## FIG.3

# FIG.4

# FIG.5

EP 0 212 541 B1